# EUROPÄISCHE PATENTSCHRIFT

(11) **EP 1 762 818 B1**
(45) Veröffentlichungstag und Bekanntmachung des Hinweises auf die Patenterteilung: **20.08.2008**
(21) Anmeldenummer: 06011575.5
(22) Anmeldetag: 03.06.2006
(51) Int. Cl.: G01B 5/016, F16C 33/38

(54) **Tastkopf**
Scanning head
Tête de palpage

(30) Priorität: 08.09.2005 DE 102005042557
(43) Veröffentlichungstag der Anmeldung: 14.03.2007
(73) Patentinhaber: Dr. Johannes Heidenhain GmbH, 83301 Traunreut (DE)
(72) Erfinder: Schopf, Reinhold, 83308 Trostberg (DE)

(56) Entgegenhaltungen:
- DE-A1- 3 016 782
- US-A- 5 327 657
- US-A- 5 345 690
- PATENT ABSTRACTS OF JAPAN Bd. 2003, Nr. 01, 14. Januar 2003 (2003-01-14) -& JP 2002 267435 A (ROLAND DG CORP), 18. September 2002 (2002-09-18)

## Beschreibung

Die Erfindung betrifft einen Tastkopf, mit druckempfindlichen Sensoren, gemäß dem Anspruch 1.

Ein Tastsystem umfasst in der Regel einen mobilen Tastkopf und ein stationäres Teil. Ein derartiger Tastkopf wird häufig in Form eines Tastschalters bzw. eines schaltenden Tasters mit einem auslenkbaren Tastelement eingesetzt, der bei einer Auslenkung aus dessen Ruheposition ein Schaltsignal abgibt. Derartige Tastköpfe werden insbesondere zur Positionsbestimmung von Werkstücken verwendet. Vorzugsweise sind diese in materialbearbeitenden Maschinen, beispielsweise Werkzeugmaschinen, eingespannt. Unter der Ruheposition des Tastelements bzw. eines Taststifts wird dabei eine Position verstanden, in welcher der Taststift keinen Kontakt mit dem anzutastenden Werkstück hat. Bei einem Kontakt des Taststifts mit dem Werkstück wird das Tastelement aus seiner Ruheposition, wenn auch nur minimal, ausgelenkt und es wird mittels eines geeigneten Wandlers ein elektrisches Signal erzeugt, wenn die Auslenkung bzw. die auf Sensoren im Tastkopf ausgeübte Kraft eine vorgegebene Schwelle überschreitet. Das elektrische Signal wird dann häufig in ein Infrarot-Signal umgewandelt, so dass auf diese Weise eine berührungs- und kabellose Signalübertragung an das stationäre Teil des Tastsystems erreicht wird.

Aus der JP 2002 267 435 und der US 5 345 690 sind Tastköpfe bekannt, bei denen die Lager zwischen Tastelement und Gehäuse so ausgestaltet sind, dass die mit dem Tastkopf verbundenen Übertragungselemente die auf das Tastelement wirkenden Kräfte direkt auf die ebene Oberfläche von mit dem zweiten Bauteil verbundenen Drucksensoren weitergeben. Um eine Positionierung des Testelements relativ zum Gehäuse und den Sensoren in der Radialebene zu gewährleisten, ist das Tastelement über ein in axiale Richtung federndes Plättchen mit dem Gehäuse verbunden.

Aus der EP 0423307 B1 ist ein Tastkopf der eingangs genannten Art bekannt, bei dem Arme eines Tastelements bzw. Stifthalters beim Antasten Verformungen in so genannten Sitzelementen hervorrufen, wobei die Verformungen gemessen werden und entsprechende Antastsignale auslösen können. Die Sitzelemente sind dabei paarweise gegenüberliegend schräg oder gewölbt ausgestaltet. Eine derartige Anordnung hat mehrere Nachteile. Zum Beispiel kann nach wiederholtem Auslenken des Tastelements eine exakte Position der Krafteinleitung in die Sensoren nicht reproduzierbar gewährleistet werden.

Der Erfindung liegt daher die Aufgabe zu Grunde, einen Tastkopf der eingangs genannten Art zu schaffen, welcher ein überaus exaktes und reproduzierbares Antastverhalten aufweist.

Diese Aufgabe wird erfindungsgemäß durch die Merkmale des Anspruches 1 gelöst.

Gemäß der Erfindung umfasst der Tastkopf Sensoren mit jeweils einer druckempfindlichen Oberfläche. Die Sensoren erzeugen bei Einwirken von Druckkräften, die eine Richtungskomponente orthogonal zur druckempfindlichen Oberfläche aufweisen, elektrische Signale. Insbesondere bezieht sich hier die Druckempfindlichkeit auf einen Berührungsdruck der von einem weiteren Körper ausgeht. Ferner umfasst der Tastkopf mechanische Übertragungselemente, und ein Halterungselement. Letzteres dient zur Positionierung der Übertragungselemente relativ zur Lage der Sensoren und ist relativ zu den Sensoren ortsfest festgelegt. Das Halterungselement ist derart konfiguriert, dass die Übertragungselemente in einer Richtung, die eine Richtungskomponente orthogonal zur Oberfläche aufweist, relativ zu den Sensoren beweglich sind. Weiterhin umfasst der Tastkopf ein Tastelement, welches relativ zu den Sensoren beweglich gelagert ist. Das Tastelement, die Sensoren und die Übertragungselemente stehen derart in mechanischer Wirkverbindung, dass beim Auslenken bzw. durch Berühren des Tastelements - insbesondere eines zum Tastelement gehörigen Taststifts - eine Pegeländerung des elektrischen Signals von zumindest einem der Sensoren erzeugbar ist.

Insbesondere besteht die mechanische Wirkverbindung darin, dass das Tastelement, die Übertragungselemente und die Sensoren berührend angeordnet sind, so dass vom Tastelement eingeleitete Druckkräfte über die Übertragungselemente in die Sensoren geleitet werden. In einer Ausgestaltung der Erfindung liegt ein Übertragungselement geometrisch zwischen jeweils einem Arm des Tastelements und einem Sensor, wobei das Übertragungselement in einer Ruhe- und / oder einer Auslenkposition des Tastelements sowohl dem jeweiligen Arm des Tastelements als auch den jeweiligen Sensor berührt.

Mit Vorteil ist der Tastkopf, bzw. die genannte Wirkverbindung, so ausgestaltet, dass die Druckkräfte im Wesentlichen senkrecht zur Oberfläche der Sensoren gerichtet sind.

Mit Vorteil sind diejenigen Flächen der Übertragungselemente abgerundet ausgestaltet, welche die druckempfindlichen Oberfläche der Sensoren oder die Tastelemente berühren. In vorteilhafter Ausgestaltung der Erfindung sind die Übertragungselemente als Kugeln ausgestaltet.

Gemäß einer bevorzugten Variante der Erfindung sind die druckempfindlichen Oberflächen der Sensoren eben ausgestaltet. Die Sensoren haben also ein plane Fläche, welche praktisch keine Führungskräfte, die parallel zu dieser Oberfläche ausgerichtet sind, auf das jeweilige Übertragungselement aufbringen können.

Mit Vorteil ist der Tatkopf so ausgestaltet, dass in der Ruhe- und / oder der Auslenkposition des Tastelements jeweils ein Übertragungselement nicht mehr als einen Sensor berührt. Dadurch, dass bei dieser Bauweise die vom Übertragungselement eingeleiteten Kräfte nicht auf mehrere Sensoren verteilt werden, ist eine maximale Signalausbeute bzw. Empfindlichkeit gegeben. Im Übrigen ist anzumerken, dass gerade bei der Verwendung druckempfindlicher Sensoren in der Regel extrem kleine Auslenkbewegungen zu einem Schalten des Tastkopfes führen. Entsprechend weicht üblicherweise hier die Ruheposition von der Auslenkposition kaum ab. Gleichwohl kann hier das Tastelement als auslenkbar gegenüber den Sensoren bezeichnet werden, weil das Tastelement gegenüber den Sensoren beweglich gelagert ist.

In einer bevorzugten Ausgestaltung der Erfindung ist das Halterungselement, das ein separates bzw. diskretes Bauteil ist, punktsymmetrisch ausgestaltet. Dies hat insbesondere den Vorteil, dass eine gleichmäßige und richtungsunabhängige Schaltcharakteristik des Tastkopfes erreicht wird. Dadurch, dass das Halterungselement quasi ringförmig ausgestaltet ist, ist es bezogen auf die Längsachse des Tastelements gegenüber tangentialen und radialen Kräften überaus biegesteif, so dass durch derart gerichtete Kräfte praktisch keine Verformungen des Halterungselements resultieren, was für die exakte Positionierung der Übertragungselemente relativ zur Lage der Sensoren von Bedeutung ist. Andererseits ist das Halterungselement in einer Richtung parallel zur Längsachse des Tastelements vergleichsweise biegeweich, so dass eine axiale Bewegung der Übertragungselemente ermöglicht wird.

Die Übertragungselemente sind an Laschen des Halterungselements angeordnet. Die Laschen sind dann in einer Richtung, die eine Richtungskomponente orthogonal zur Oberfläche der Sensoren aufweist, z. B. senkrecht zur Oberfläche, biegeweich ausgestaltet. Als Laschen sind Bereiche des Halterungselements zu verstehen, welche hervorstehend bzw. auskragend sind. Entsprechend existieren Bereiche des Halterungselements welche vergleichsweise schmal sind und welche letztlich die erforderliche Biegeweichheit gewährleisten. Alternativ dazu kann die Biegeweichheit auch durch andere Maßnahmen erreicht werden. Beispielsweise kann das Halterungselement perforiert oder geschlitzt ausgeführt werden, um entsprechende Bereiche zu schwächen und damit biegeweich zu machen, oder aber es kann gezielt der Querschnitt reduziert werden bzw. es kann auch der biegeweiche Bereich aus einem gesonderten Material ausgeführt sein.

In weiterer Ausgestaltung der Erfindung ist der Tastkopf so konfiguriert, dass zumindest ein Übertragungselement in der Ruheposition des Tastelements zumindest einen der Sensoren berührt. Insbesondere kann ein Übertragungselement in der Ruheposition des Tastelements durch eine elastische Verformung des Halterungselements auf zumindest einen der Sensoren gedrückt werden.

Im Allgemeinen wird beim Auslenken des Tastelements, welches häufig drei um 120° versetzte Arme aufweist, von einem Arm eine Druckkraft und von einem anderem Arm eine Druck entlastende Kraft auf das jeweils zugehörige Übertragungselement übertragen. Das Halterungselement ermöglicht nicht nur die exakte Positionierung der Übertragungselemente relativ zu den Sensoren, sondern gewährleistet gleichzeitig eine definierte Vorspannung bzw. Druckkraft auf die Sensoren, auch wenn sich beispielsweise ein Arm des Tastelements vom Übertragungselement abgehoben hat, so dass auch in diesem Zustand durch die spezielle Ausgestaltung des Halterungselements ein Berührkontakt zwischen Übertragungselement und Tastelement vorherrscht. Gerade bei hochempfindlichen Sensoren hat dies den Vorteil, dass deren druckempfindliche Oberfläche weniger Verschleiß bzw. Belastungen ausgesetzt ist.

In weiterer Ausgestaltung der Erfindung ist der Tastkopf so konstruiert, dass die Sensoren in einer Ebene liegen, welche senkrecht zur Längsachse des Tastelements, bzw. des Taststiftes angeordnet ist. Dabei werden häufig drei um 120° versetzt angeordnete Sensoren verwendet, die sich jeweils im gleichen Abstand zur Längsachse des Tastelements befinden.

Mit Vorteil ist ein Übertragungselement durch eine Klebeverbindung mit dem Halterungselement verbunden. Dadurch wird vermieden, dass sich das betreffende Übertragungselement relativ zum Halterungselement und damit auch relativ zur jeweiligen Oberfläche der Sensoren dreht. Durch diese Maßnahme kann die Lebensdauer der Sensoren erhöht werden, bzw. es können zuverlässig vergleichsweise sensible und hochgenaue Sensoren verwendet werden.

Vorteilhafte Ausbildungen der Erfindung entnimmt man den abhängigen Ansprüchen.

Weitere Einzelheiten und Vorteile des erfindungsgemäßen Tastkopfes ergeben sich aus der nachfolgenden Beschreibung eines Ausführungsbeispieles anhand der beiliegenden Figuren.

Es zeigen die
- Figur 1: eine perspektivische Ansicht eines Tastkopfs,
- Figur 2: eine perspektivische Ansicht einer Messeinrichtung im Tastkopf,
- Figur 3: eine Draufsicht auf ein Halterungselement,
- Figur 4: eine Teilschnittdarstellung des Tastkopfes,
- Figur 5: eine Detailansicht der Messeinrichtung des Tastkopfes,
- Figur 6: eine Detailansicht des Stifthalters.

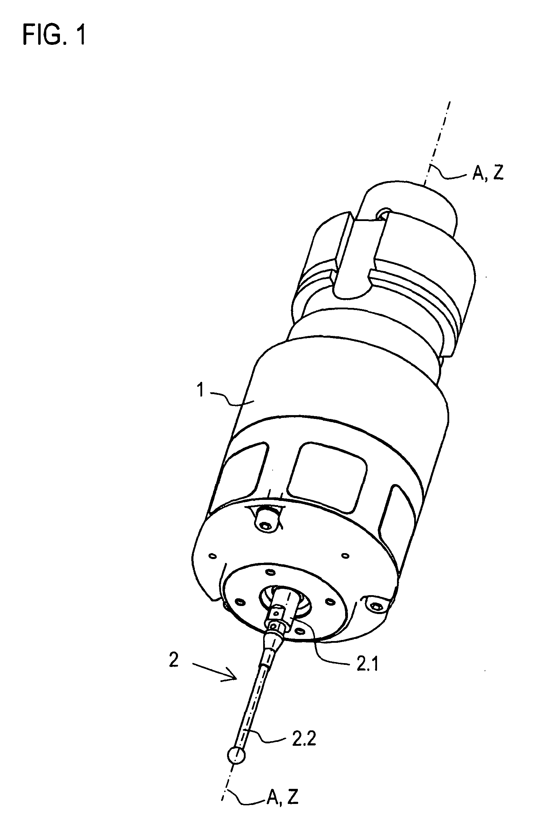

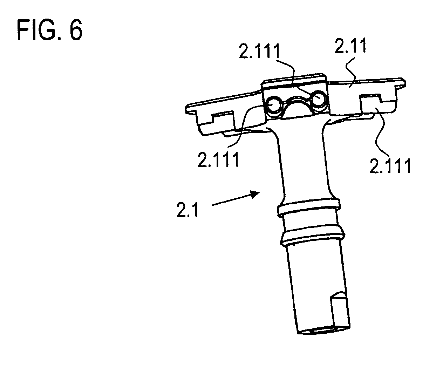

In der Figur 1 ein Tastkopf in einer perspektivischen Außenansicht gezeigt. Der Tastkopf umfasst demnach ein Gehäuse 1, aus dem ein Tastelement 2 ragt. Das Tastelement 2 weist eine Längsachse A auf, welche im Ruhezustand bzw. in der Ruheposition gleichzeitig die Längsachse Z des Gehäuses 1 darstellt. Im vorgestellten Ausführungsbeispiel umfasst das Tastelement 2 zwei Teile, nämlich einen Stifthalter 2.1 und einen Taststift 2.2, an dem in der Figur 1 unten als Taststiftende eine Antastkugel abgebracht ist. Der Taststift 2.2 weist ferner eine Sollbruchstelle auf. Stifthalter 2.1 und Taststift 2.2 sind durch eine Schraubverbindung lösbar miteinander verbunden. Der Stifthalter 2.1 des Tastelements 2 weist an einem Ende drei um 120° versetzt angeordnete Arme 2.11 auf (Figur 6). An der Unterseite eines jeden Armes 2.11 sind zwei parallele zylindrische Körper 2.111 angebracht. An den radial äußeren Enden der Arme 2.11 befindet sich jeweils ein Absatz.

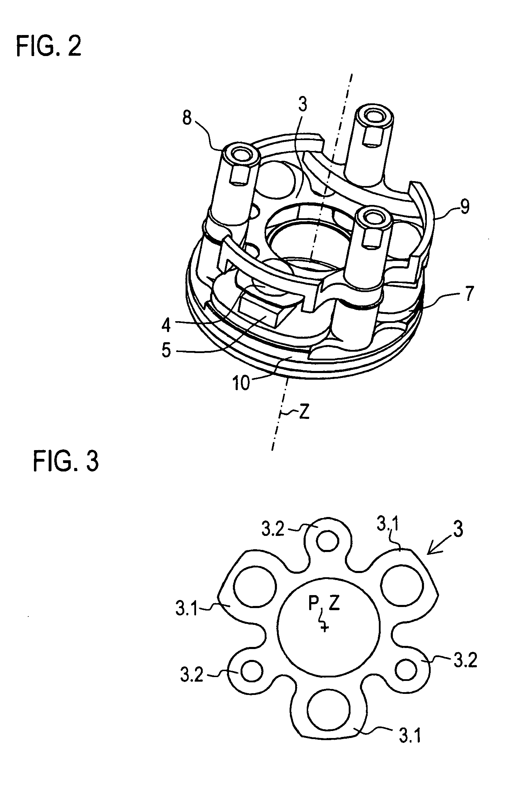

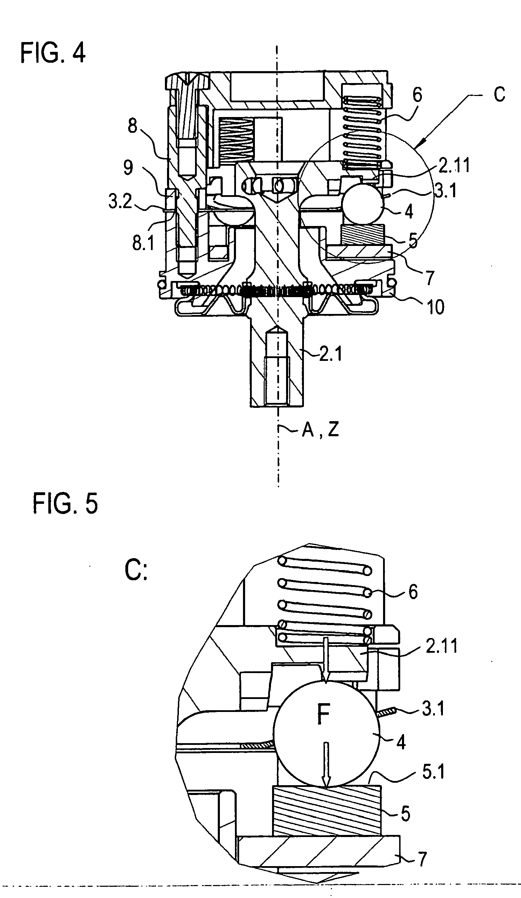

In der Figur 2 ist eine Messeinrichtung, wie sie sich im inneren des Gehäuses 1 befindet gezeigt. Auf einem im Wesentlichen scheibenförmigen Basiskörper 10 befindet sich eine Leiterplatte 7, auf der drei Sensoren 5 montiert sind. Im vorgestellten Ausführungsbeispiel werden als Sensoren 5 Drucksensorelemente verwendet, welche auf piezoresistiven Siliziumchips basieren. Diese Sensoren 5 weisen eine druckempfindliche Oberfläche 5.1 (Figur 5) auf, an der sich hier pn-isolierte Brückenwiderstände befinden.

Auf der Oberfläche 5.1 eines jeden Sensors 5 ruhen Kugeln 4, welche als mechanische Übertragungselemente dienen. Damit jederzeit exakt relativ zu den Sensoren 5 positioniert sind, ist ein Halterungselement 3 vorgesehen, welches bezüglich der Sensoren 5 ortsfest festgelegt ist.

In der Figur 3 ist das Halterungselement 3, das im gezeigten Ausführungsbeispiel als ein separates einstückiges Bauteil, insbesondere als ein Metallblech mit einer Stärke von 0,25 mm ausgeführt ist, in einer Draufsicht dargestellt. Das Halterungselement 3 weist drei um 120° entlang einer Umfangslinie versetzt angeordnete Laschen 3.1 auf, mit jeweils einer Bohrung. Der Innendurchmesser der Bohrung ist etwas kleiner als der Außendurchmesser der Kugeln 4. Darüber hinaus umfasst das Halterungselement 3 zudem drei weitere Laschen 3.2, die ebenfalls Bohrungen aufweisen. Das Halterungselement 3 ist punktsymmetrisch bezüglich eines Punktes P, der hier gleichzeitig der Mittelpunkt einer Zentralbohrung ist, ausgestaltet.

In der Figur 4 ist eine Schnittdarstellung durch den Tastkopf gezeigt. Beim Zusammenbau des Tastkopfes wird die Leiterplatte 7 mit den darauf montierten Sensoren 5 passgenau auf dem Basiskörper 10 fixiert. Danach werden die Kugeln 4 auf die Oberflächen 5.1 der Sensoren 5 gelegt. Das Halterungselement 3 wird dann so auf die Kugeln 4 gesetzt, dass diese die Bohrungen in den Laschen 3.1 teilweise durchdringen. Danach werden Bolzen 8 durch Öffnungen eines Ringkörpers 9 und durch die Bohrungen der weiteren Laschen 3.2 gesteckt und in ein Innengewinde im Basiskörper 10 gedreht. Dadurch, dass die Bolzen 8 hochgenau bearbeitete Außenflächen 8.1 aufweisen, welche spielfrei in die Bohrungen der weiteren Laschen 3.2 passen, sind das Halterungselement 3 und damit auch die Kugeln 4 exakt relativ zu den Sensoren in einer Ebene senkrecht zur Z-Achse positioniert. Aber auch in einer Richtung parallel zur Z-Achse ist die Positionierung der Kugeln 4 passgenau, denn das Halterungselement 3 wird stirnseitig gegen eine Fläche des Basiskörpers 10 gedrückt. Dadurch wird das vergleichsweise dünne Halterungselement 3 im Bereich der Laschen 3.1 elastisch verformt, so dass letztlich die Kugeln 4 mit einer definierten Auflagekraft gegen die Sensoren 5 gedrückt werden und somit spielfrei montiert sind. Dadurch wird gewährleistet, dass die Kugeln 4 stets in Kontakt mit den jeweiligen Oberflächen 5.1 der Sensoren 5 sind. Durch eine Klebeverbindung wird zwischen den Kugeln 4 und dem Halterungselement 3 verhindert, dass sich die Kugeln relativ zum Halterungselement 3 und damit auch relativ zur jeweiligen Oberfläche 5.1 der Sensoren 5 drehen.

Beim Zusammenbau des Tastkopfes wird unter anderem der Stifthalter 2.1 des Tastelements 2, wie er in der Figur 6 dargestellt ist, durch die zentrale Öffnung gesteckt, so dass dieser letztlich auf den Kugeln 4 aufliegt. Die Arme 2.11 des Stifthalters 2.1 sind an ihren Unterseiten so ausgestaltet, dass diese zwei parallel gerichtete zylindrische Körper 2.111 aufweisen, deren Abstand kleiner ist als der Durchmesser Kugeln 4. Dadurch kommt jede der Kugeln 4 jeweils zwischen einem Paar dieser zylindrischen Körper 2.111 zu liegen. Schließlich wird der Stifthalter 2.1 durch die Federn 6 vorgespannt und ist dann beweglich relativ zum Gehäuse 1 und damit auch zu den Sensoren 5 montiert.

Im Messbetrieb wird der Tastkopf beispielsweise innerhalb des Bearbeitungsraumes einer Werkzeugmaschine verfahren. Sobald die Antastkugel ein Hindernis - etwa ein zu vermessendes Werkstück - berührt, wird das gesamte Tastelement 2, wenn auch geringfügig, ausgelenkt. Die Auslenk- bzw. Schaltposition ist erreicht, bevor ein Arm 2.11 des Tastelements 2 den mechanischen Kontakt zu der entsprechenden Kugel 4 verliert. Dadurch wird verhindert, dass eine richtungsabhängige Schaltcharakteristik entsteht. Im Betrieb des Tastkopfes wird eine Speisespannung zur Versorgung der Sensoren 5 über die Leiterplatte 7 eingeleitet. Durch Berühren des Tastelements 2 ändern sich die Druckkräfte F (Figur 5), die auf die Sensoren 5 einwirken, was eine Pegeländerung des elektrischen Signals von zumindest einem der Sensoren 5 zur Folge hat. Die elektrischen Signale werden zu einer weiteren Leiterplatte innerhalb des Gehäuses 1 des Tastkopfes weitergeleitet und dort in einer geeigneten elektronischen Schaltung weiterverarbeitet, so dass die entsprechenden Schaltsignale schließlich in elektromagnetische Signale umgewandelt werden, welche zu einer ortsfesten Empfängerstation gesendet werden.

Die ortsfeste Empfängerstation ist an einem unbeweglichen Bauteil beispielsweise der Werkzeugmaschine fixiert. Von dieser ortsfesten Empfängerstation wird das empfangene Signal an eine Elektronik, etwa in der Steuerung der Werkzeugmaschine weitergeleitet, wo die Position der Antastkugel bestimmt wird, und gleichzeitig die Maschine angehalten wird.

Dadurch, dass im vorgestellten Ausführungsbeispiel als Übertragungsmittel Kugeln 4 verwendet werden, ist eine nahezu punktförmige Kontaktfläche auf der jeweiligen Oberfläche 5.1 der Sensoren 5 gegeben. Entsprechend sind die Druckkräfte F senkrecht oder orthogonal zur jeweiligen Oberfläche 5.1 ausgerichtet, was eine optimale Signalausbeute bis Signalamplitude zur Folge hat.

Ebenso ist durch das Halterungselement 3 sichergestellt, dass die Kugeln 4 jeweils reproduzierbar am richtigen Punkt auf der Oberfläche 5.1 der Sensoren 5 lagern. Dies ist besonders wichtig, wenn man bedenkt, dass sich das Auslenksignal aus allen drei Einzelsignalen der Sensoren 5 zusammensetzt, wobei sich beim Berühren des Tastelements 2, insbesondere des Taststifts 2.2, für alle Sensoren 5 oder nur für eine Teilanzahl der Sensoren 5 die Druckkraft F reduziert. Der erstgenannte Fall tritt etwa dann ein, wenn das zu vermessende Werkstück aus einer Richtung parallel zur Längsachse A des Tastelements 2 angefahren wird. Dann heben entgegen den Kräften der Federn 6 die drei Arme 2.11 des Tastelements 2 möglicherweise vollständig von den Kugeln 4 ab. Die Kugeln 4 bleiben aber mit Hilfe des Halterungselements 3 relativ zu den Sensoren 5 unverändert positioniert.

Sobald nach dem Antasten das Tastelement 2, bzw. der Stifthalter 2.1 wieder in seine Ruheposition zurückkehrt, lagern die drei Arme 2.11 wieder exakt auf den Kugeln 4 wobei die Krümmung der Kugeln 4 eine ausrichtende bzw. zentrierende Wirkung auf das Tastelement 2 bewirken. Durch die beschriebene Bauweise wird also ein Tastkopf geschaffen, der reproduzierbar auch noch nach vielen Antastvorgängen überaus exakt arbeitet.

## Patentansprüche

1. Tastkopf umfassend
• Sensoren (5) mit jeweils einer druckempfindliche Oberfläche (5.1), wobei durch die Sensoren (5) bei Einwirken von Druckkräften (F), die eine Richtungskomponente orthogonal zur druckempfindlichen Oberfläche (5.1) aufweisen, elektrischen Signale erzeugbar sind,
• mechanische Übertragungselemente (4),
• ein Halterungselement (3), ausgestaltet zur Positionierung der Übertragungselemente (4) bezüglich der Sensoren (5), welches relativ zu den Sensoren (5) ortsfest festgelegt ist und derart konfiguriert ist, dass die Übertragungselemente (4) in einer Richtung, die eine Richtungskomponente orthogonal zur druckempfindlichen Oberfläche (5.1) aufweist, relativ zu den Sensoren (5) beweglich sind, sowie
• ein Tastelement (2), welches relativ zu den Sensoren (5) beweglich gelagert ist,
wobei
• das Tastelement (2), die Sensoren (5) und die Übertragungselemente (4) derart in mechanischer Wirkverbindung stehen, dass durch Berühren des Tastelements (2) eine Pegeländerung eines elektrischen Signals von zumindest einem der Sensoren (5) erzeugbar ist, und
• die Übertragungselemente (4) an Laschen (3.1) des Halterungselements (3) angeordnet sind, und die Laschen (3.1) in einer Richtung, die eine Richtungskomponente orthogonal zur druckempfindlichen Oberfläche (5.1) aufweist, biegeweich ausgestaltet sind.

2. Tastkopf gemäß dem Anspruch 1, wobei die Übertragungselemente (4) als Kugeln ausgestaltet sind.

3. Tastkopf gemäß dem Anspruch 1 oder 2, wobei die druckempfindlichen Oberflächen (5.1) der Sensoren (5) eben ausgestaltet sind.

4. Tastkopf gemäß einem der vorhergehenden Ansprüche, wobei in der Ruhe- und / oder einer Auslenkposition des Tastelements (2) ein Übertragungselement (4) nicht mehr als einen Sensor (5) berührt.

5. Tastkopf gemäß einem der vorhergehenden Ansprüche, wobei das Halterungselement (3) punktsymmetrisch ausgestaltet ist.

6. Tastkopf gemäß einem der vorhergehenden Ansprüche, wobei das das Halterungselement (3) als einstückiges Bauteil ausgestaltet ist.

7. Tastkopf gemäß einem der vorhergehenden Ansprüche, wobei zumindest ein Übertragungselement (4) in der Ruheposition des Tastelements (2) zumindest einen der Sensoren (5) berührt.

8. Tastkopf gemäß einem der vorhergehenden Ansprüche, wobei zumindest ein Übertragungselement (4) durch eine elastische Verformung des Halterungselements (3) auf zumindest einen der Sensoren (5) gedrückt wird.

9. Tastkopf gemäß einem der vorhergehenden Ansprüche, wobei zumindest ein Übertragungselement (4) durch eine Klebeverbindung mit dem Halterungselement (3) verbunden ist.

10. Tastkopf gemäß einem der vorhergehenden Ansprüche, wobei die Sensoren (5) auf einer Leiterplatte (7) montiert sind.

11. Tastkopf gemäß einem der vorhergehenden Ansprüche, wobei die Sensoren (5) piezoresistive Siliziumchips umfassen.

## Claims

1. Sensing head comprising
- sensors (5) each having one pressure-sensitive surface (5.1), wherein on the application of pressure forces (F) having a directional component orthogonal to the pressure-sensitive surface (5.1), electrical signals can be generated by the sensors (5),
- mechanical transmission elements (4),
- a support element (3), designed for the purpose of positioning the transmission elements (4) with respect to the sensors (5), said support element being positioned statically fixed relative to the sensors (5) and configured in such a way that the transmission elements (4) can move relative to the sensors (5) in a direction that has a directional component orthogonal to the pressure-sensitive surface (5.1), and
- a sensing element (2) which is mounted so that it can move relative to the sensors (5),
wherein
- the sensing element (2), the sensors (5) and the transmission elements (4) are mechanically operatively connected in such a way that by touching the sensing element (2) a change in the level of an electrical signal of at least one of the sensors (5) can be generated, and
- the transmission elements (4) are arranged on lugs (3.1) of the support element (3), and said lugs (3.1) are constructed so as to be flexurally elastic in a direction that has a directional component orthogonal to the pressure-sensitive surface (5.1).

2. Sensing head according to Claim 1, wherein the transmission elements (4) are constructed in the form of spheres.

3. Sensing head according to Claim 1 or 2, wherein the pressure-sensitive surfaces (5.1) of the sensors (5) have a flat construction.

4. Sensing head according to one of the preceding Claims, wherein in the resting and/or a deflected position of the sensor element (2), a transmission element (4) touches no more than one sensor (5).

5. Sensing head according to one of the preceding Claims, wherein the support element (3) has a point symmetrical construction.

6. Sensing head according to one of the preceding Claims,
wherein the support element (3) is constructed as an integral component.

7. Sensing head according to one of the preceding Claims,
wherein at least one transmission element (4) touches at least one of the sensors (5) in the rest position of the sensing element (2).

8. Sensing head according to one of the preceding Claims, wherein at least one transmission element (4) is pressed on to at least one of the sensors (5) by an elastic deformation of the support element (3).

9. Sensing head according to one of the preceding Claims,
Wherein at least one transmission element (4) is connected to the support element (3) by means of an adhesive bond.

10. Sensing head according to one of the preceding Claims, wherein the sensors (5) are assembled on a circuit board (7).

11. Sensing head according to one of the preceding Claims,
Wherein the sensors (5) comprise piezo-resistive silicon chips.

## Revendications

1. Bouton palpeur comportant
- des capteurs (5) comprenant chacun une surface (5.1) sensible à la pression, des signaux électriques pouvant être générés par les capteurs (5) en cas d'agissement de forces de pression (F), qui présentent une composante de direction perpendiculairement à la surface (5.1) sensible à la pression,
- des éléments de transmission (4) mécaniques,
- un élément de support (3), conçu pour le positionnement des éléments de transmission (4) par rapport aux capteurs (5), lequel est défini de façon fixe par rapport aux capteurs (5) et est configuré de telle sorte que les éléments de transmission (4) sont mobiles par rapport aux capteurs (5) dans une direction qui présente une composante de direction perpendiculairement à la surface (5.1) sensible à la pression, et
- un élément palpeur (2), qui est logé de façon mobile par rapport aux capteurs (5),
- l'élément palpeur (2), les capteurs (5) et les éléments de transmission (4) étant en liaison active mécanique de telle sorte que, par le contact de l'élément palpeur (2), une variation de niveau d'un signal électrique peut être générée par au moins l'un des capteurs (5), et
- les éléments de transmission (4) sont disposés sur des pattes (3.1) de l'élément de support (3), et les pattes (3.1) sont conçues souples en flexion dans une direction qui présente une composante de direction perpendiculairement à la surface (5.1) sensible à la pression.

2. Bouton palpeur selon la revendication 1, les éléments de transmission (4) étant conçus sous forme de boules.

3. Bouton palpeur selon la revendication 1 ou 2, les surfaces (5.1) sensibles à la pression des capteurs (5) étant conçues planes.

4. Bouton palpeur selon l'une quelconque des revendications précédentes, un élément de transmission (4) ne touchant pas plus qu'un capteur (5) dans la position de repos et/ou une position de déviation de l'élément palpeur (2).

5. Bouton palpeur selon l'une quelconque des revendications précédentes, l'élément de support (3) étant conçu avec une symétrie ponctuelle.

6. Bouton palpeur selon l'une quelconque des revendications précédentes, l'élément de support (3) étant conçu comme un composant d'une seule pièce.

7. Bouton palpeur selon l'une quelconque des revendications précédentes, au moins un élément de transmission (4) touchant au moins l'un des capteurs (5) dans la position de repos de l'élément palpeur (2).

8. Bouton palpeur selon l'une quelconque des revendications précédentes, au moins un élément de transmission (4) étant appuyé par une déformation élastique de l'élément de support (3) sur au moins l'un des capteurs (5).

9. Bouton palpeur selon l'une quelconque des revendications précédentes, **caractérisé en ce que** au moins un élément de transmission (4) est relié par un assemblage collé avec l'élément de support (3) .

10. Bouton palpeur selon l'une quelconque des revendications précédentes, les capteurs (5) étant montés sur une plaque de circuits imprimés (7).

11. Bouton palpeur selon l'une quelconque des revendications précédentes, les capteurs (5) comprenant des puces à silicium piézo-résistives.
